(19) Europäisches Patentamt / European Patent Office / Office européen des brevets

(11) **EP 2 989 232 B1**

(12) **EUROPEAN PATENT SPECIFICATION**

(45) Date of publication and mention of the grant of the patent:
**15.08.2018 Bulletin 2018/33**

(51) Int Cl.:
*C25B 11/04* *(2006.01)*          *C25B 1/30* *(2006.01)*
*H01M 4/92* *(2006.01)*

(21) Application number: **14723356.3**

(22) Date of filing: **25.04.2014**

(86) International application number:
**PCT/EP2014/058431**

(87) International publication number:
**WO 2014/174065 (30.10.2014 Gazette 2014/44)**

(54) **ALLOY CATALYST MATERIAL**

LEGIERUNGSKATALYSATORMATERIAL

MATÉRIAU DE CATALYSEUR EN ALLIAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2013 EP 13165265**
**04.10.2013 EP 13187437**

(43) Date of publication of application:
**02.03.2016 Bulletin 2016/09**

(73) Proprietor: **Technical University of Denmark**
**2800 Lyngby (DK)**

(72) Inventors:
• **STEPHENS, Ifan**
**DK-1361 Copenhagen K (DK)**
• **VERDAGUER-CASADEVALL, Arnau**
**DK-2800 Kgs. Lyngby (DK)**
• **WICKMAN, Björn**
**S-448 33 Floda (SE)**
• **ROSSMEISL, Jan**
**DK-3450 Lynge (DK)**
• **MALACRIDA, Paolo**
**DK-2100 Copenhagen Ø (DK)**
• **CHORKENDORFF, Ib**
**DK-3460 Birkerød (DK)**
• **SIAHROSTAMI, Samira**
**S-412 96 Göteborg (SE)**
• **ESCUDERO-ESCRIBANO, María**
**DK-2100 Copenhagen Ø (DK)**
• **KARAMAD, Mohammedreza**
**DK-2800 Lyngby (DK)**

(74) Representative: **Høiberg P/S**
**Adelgade 12**
**1304 Copenhagen K (DK)**

(56) References cited:
**WO-A1-2014/169235     GB-A- 1 244 850**
**JP-A- 2010 215 744     US-A- 3 759 823**
**US-A- 5 505 921     US-B1- 6 190 606**

• **GISELE CRISTIANE BECHER RIBAS ET AL: "Thermal and electrochemical study of solid-state reaction of mercury with Pt-20% Rh alloy", JOURNAL OF THERMAL ANALYSIS AND CALORIMETRY, vol. 104, no. 2, 1 May 2011 (2011-05-01), pages 549-554, XP055081808, ISSN: 1388-6150, DOI: 10.1007/s10973-010-1097-x**
• **SAWYER D T ET AL: "Electrochemistry of oxygen and superoxide ion in dimethylsulfoxide at platinum, gold and mercury electrodes", JOURNAL OF ELECTROANALYTICAL CHEMISTRY AND INTERFACIAL ELECTROCHEMISTRY, ELSEVIER, AMSTERDAM, NL, vol. 12, no. 2, 1 August 1966 (1966-08-01), pages 90-101, XP026518289, ISSN: 0022-0728, DOI: 10.1016/0022-0728(66)80021-9 [retrieved on 1966-08-01]**
• **MARIAN CHATENET ET AL: "Silver-Platinum Bimetallic Catalysts for Oxygen Cathodes in Chlor-alkali Electrolysis: Comparison with Pure Platinum", JOURNAL OF THE ELECTROCHEMICAL SOCIETY, vol. 150, no. 3, 1 January 2003 (2003-01-01), page D47, XP055134246, ISSN: 0013-4651, DOI: 10.1149/1.1540063**

- HERNANDEZ-FERNANDEZ ET AL: "Relevance of the nature of bimetallic PtAu nanoparticles as electrocatalysts for the oxygen reduction reaction in the presence of methanol", JOURNAL OF POWER SOURCES, ELSEVIER SA, CH, vol. 177, no. 1, 17 November 2007 (2007-11-17), pages 9-16, XP022418245, ISSN: 0378-7753, DOI: 10.1016/J.JPOWSOUR.2007.11.020
- J. K. NØRSKOV ET AL: "Towards the computational design of solid catalysts", NATURE CHEMISTRY, vol. 1, no. 1, 1 April 2009 (2009-04-01), pages 37-46, XP055134281, ISSN: 1755-4330, DOI: 10.1038/nchem.121
- ELIZABETH R. ESSINGER-HILEMAN ET AL: "Aqueous room-temperature synthesis of Au-Rh, Au-Pt, Pt-Rh, and Pd-Rh alloy nanoparticles: fully tunable compositions within the miscibility gaps", JOURNAL OF MATERIALS CHEMISTRY, vol. 21, no. 31, 1 January 2011 (2011-01-01), page 11599, XP055132899, ISSN: 0959-9428, DOI: 10.1039/c0jm03913f
- TANUSHREE GHOSH ET AL: "Pt-Cd and Pt-Hg Phases As High Activity Catalysts for Methanol and Formic Acid Oxidation", JOURNAL OF PHYSICAL CHEMISTRY C, vol. 114, no. 29, 29 July 2010 (2010-07-29), pages 12545-12553, XP055298413, US ISSN: 1932-7447, DOI: 10.1021/jp101175m

## Description

## Field of invention

The present disclosure relates to an alloy catalyst material for use in the synthesis of hydrogen peroxide from oxygen and hydrogen or from oxygen and water. The present disclosure also relates to a cathode and an electrochemical cell comprising the novel catalyst material, and the process use of the novel catalyst material for synthesising hydrogen peroxide from oxygen and hydrogen or from oxygen and water.

## Background of invention

Hydrogen peroxide ($H_2O_2$) is one of the most important inorganic chemicals to be produced worldwide. It is a soluble powerful oxidizer over the whole pH range and one of the most preferred oxidants from a green chemistry perspective. The world production of hydrogen peroxide grew to 2.2 million tons (100 % $H_2O_2$) in 2007. Its industrial application includes textile, pulp and paper bleaching, organic synthesis (propylene oxide), the manufacture of inorganic chemicals and detergents, environmental and other applications.

At present, the majority of hydrogen peroxide is manufactured by sequential oxidation and hydrogenation of an alkyl anthrahydroquinone using the Riedl-Pfleiderer process (ULLMANN'S Encyclopedia of Industrial Chemistry; Online ISBN: 9783527306732). However, there are issues associated with the process. First of all, to keep constant production of hydrogen peroxide it is crucial to periodically replace anthraquinone with the anthrahydroquinone. Moreover, the whole process requires very large amounts of organic solvents and it is not an environmentally friendly process. Given these drawbacks, smaller scale manufacturing to produce hydrogen peroxide on-site is of significant commercial interest. This can be achieved by synthesizing the compound directly from its components: hydrogen and oxygen.

Despite significant interest there is no commercial process for the direct hydrogen peroxide synthesis. Recent advances in the field mainly use a gas mixture of oxygen and hydrogen, but this presents an obvious risk of explosion from the $H_2/O_2$ mixture (J. M. Campos-Martin, G. Blanco-Brieva, J. L. G. Fierro, Angew. Chem. Int. Ed., 2006, 45, 6962-6984). Recently another way to synthesize hydrogen peroxide has been proposed by using a polymer electrolyte membrane (PEM) fuel cell. However, regardless of the technology chosen the main difficulty thus far is to find a catalyst which reduces oxygen to hydrogen peroxide with high selectivity.

The "classical" concept of the fuel cell is to convert hydrogen and oxygen into water, and generate energy by doing so. A PEM fuel cell consists of three parts: an anode, a membrane and a cathode. In the anode hydrogen gas is introduced and converted into protons and electrons with a platinum catalyst. These protons then cross the membrane towards the cathode, while electrons have to use an external circuit where electricity is collected. In the cathode protons, electrons and oxygen from the air combine in the oxygen reaction. It turns out that such reaction has two possible final products: water (which is desired in the classical fuel cell) and hydrogen peroxide. Oxygen reduction to water is often achieved by using Pt or Pd based catalysts. Thus far Au or Pd/Au are the best catalysts for the selective reduction of oxygen to hydrogen peroxide ("Single Atom Hot-Spots at Au-Pd Nanoalloys for Electrocatalytic H2O2 Production", J. Am. Chem. Soc. 2011, 133, pp. 19432-19441).

In comparison to the existing technologies, the electrochemical production of $H_2O_2$ would be highly desirable. It could avoid the danger of explosion that mixing hydrogen and oxygen represents in the direct synthesis route. This would allow on-site synthesis of $H_2O_2$ with a small device, eliminating the need to transport and handle the chemical. Moreover, when produced in a fuel cell, it should, in principle, be possible to recover most of the Gibbs free energy of formation of $H_2O_2$, -120 kJ mol$^{-1}$, as electrical energy. In addition, since $H_2O_2$ production is a 2-electron process, it should be possible to find an "ideal catalyst", sustaining high current densities, millivolts from the reversible thermodynamic potential, minimizing efficiency losses (M. T. M. Koper, J. Electroanal. Chem., 2011, 660, 254-260).

The idea of using a fuel cell in the production of hydrogen peroxide was first proposed in 2001 for alkaline membrane fuel cells (Tammeveski, K.; Kontturi, K.; Nichols, RJ.; Potter, RJ.; Schiffrin, DJ. (2001). Surface redox catalysis for O-2 reduction on quinone-modified glassy carbon electrodes. Journal of Electroanalytical Chemistry, 515(1-2), 101 - 112.). However, alkaline fuel cell development is far from being commercial and it would be more relevant in applicability terms to perform the synthesis in PEM fuel cells instead. It just requires changing the cathode catalyst to one that selectively reduces oxygen into hydrogen peroxide instead of water. It is clean technology in the sense that it does not produce any harmful products directly and it generates electricity as a byproduct.

Alternatively, hydrogen peroxide could be synthesized from oxygen and water by using a PEM electrolyser, where water is oxidised in the anode and oxygen is reduced in the cathode. In such case the device would consume energy instead of producing it, but there would be no need to use hydrogen.

Industrially viable, on-site electrochemical production of $H_2O_2$ would require a catalyst that is stable, active and selective. Ensuring that the catalyst is selective towards the 2-electron reduction of $O_2$ to $H_2O_2$, rather than the 4-electron reduction to $H_2O$, is particularly challenging, as $H_2O_2$ is thermodynamically unstable in comparison to $H_2O$. The most active and selective catalysts found for this reaction, thus far, are based on porphyrins containing 3d transition metals such as Co at their active sites. However, these catalysts tend to corrode in the presence of $H_2O_2$ as hydrogen peroxide oxidizes their nitrogen ligands. On the other hand, catalysts based on noble metals are more likely to provide adequate stability under the oxidizing conditions required at a $H_2O_2$-producing cathode. Au nanoparticles have a reasonable activity for $H_2O_2$ production, although their selectivity is only ~80 % at 0.3 V. On the other hand, Pd-modified Au nanoparticles, show similar $H_2O_2$ production activity to Au and up to ~90 % selectivity.

Hence, a wide variety of catalyst materials have already been introduced for production of hydrogen peroxide in a fuel cell. Hydrogen peroxide is selectively formed if and only if one can ensure that the O-O bond is preserved during the oxygen reduction reaction. Among all materials previously tested and introduced for hydrogen peroxide production, only those where active sites are isolated and well dispersed prevent O-O bond breaking. An isolated active site is considered as a site made of an active metal for the oxygen reduction reaction surrounded by inactive metal atoms for the same reaction. Gold surfaces with isolated Pd atoms (PdAu), where gold is a less active metal and Pd is the active metal for the oxygen reduction reaction, is a successful example found by Jirkovsky et al (see for example WO 2012/085174 and "Single Atom Hot-Spots at Au-Pd Nanoalloys for Electrocatalytic H2O2 Production", J. Am. Chem. Soc. 2011, 133, pp. 19432-19441).

The inventors of the present disclosure have investigated the applicability of alloys for their beneficial catalytically effect of catalysing the oxygen reduction reaction of the hydrogen peroxide synthesis. In their investigation they have found alternative catalyst materials that fulfil the criteria of being 1) selective and active for the oxygen reduction reaction, and 2) stable at pH = 0 and potential of $O_2$ reduction to $H_2O_2$.

**Summary of invention**

In a first aspect of the present disclosure, the present disclosure provides an alloy catalyst material, which is very useable for the electrochemical synthesis of hydrogen peroxide from oxygen and hydrogen, or from oxygen and water, due to an improved selectivity and activity. Moreover the catalyst materials are cheap and easy to prepare and they are stable at the conditions of the electrochemical hydrogen peroxide synthesis process.

In a second aspect of the present disclosure, the present disclosure provides a cathode comprising the alloy catalyst material. The cathode is designed for use in the electrochemical synthesis of hydrogen peroxide from oxygen and hydrogen or from oxygen and water.

In a third aspect of the present disclosure, the present disclosure provides an electrochemical cell for synthesising hydrogen peroxide from oxygen and hydrogen, or from oxygen and water. This electrochemical cell comprises the cathode that comprises the alloy catalyst material.

In a fourth aspect of the present disclosure, the present disclosure relates to a process for producing hydrogen peroxide from oxygen and hydrogen or from oxygen and water, wherein the alloy catalyst material is used as a catalyst for the oxygen reduction reaction

In a fifth aspect of the present disclosure, the present disclosure relates to the use of an alloy catalyst material in the synthesis of hydrogen peroxide from oxygen and hydrogen or from oxygen and water.

**Description of Drawings**

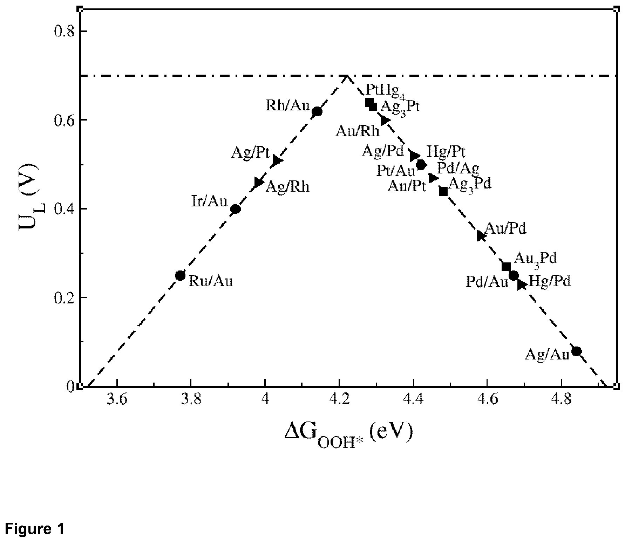

Fig. 1 shows a Volcano plot describing catalytic trends in two-electron oxygen reduction. The binding energy to OOH has been used as descriptor in the X-axis. In the Y-axis the theoretical overpotential is plotted. Three categories of alloys have been studied. Circles are the surface alloys of closely packed Au. Triangles are the surface alloys of Pd, Pt and Rh. Bulk alloys of Pt and Pd are shown by squares. The equilibrium potential of two-electron reduction of $O_2$ is shown as a dotted and dashed line.

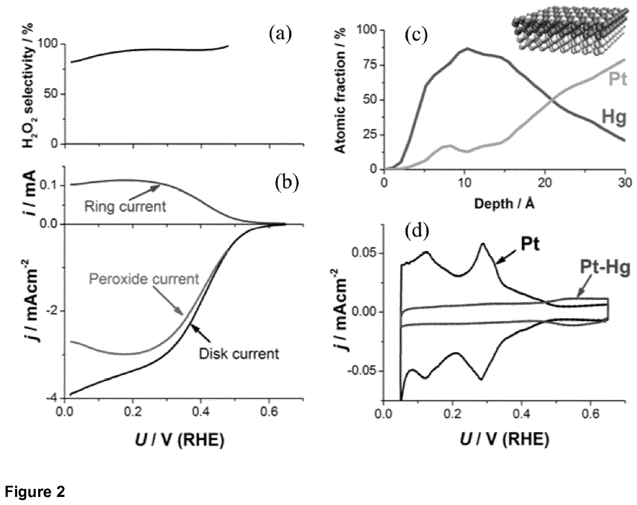

Fig. 2 shows experimental characterization of Pt-Hg in extended flat surfaces. (a) $H_2O_2$ selectivity as a function of the applied potential. (b) Oxygen reduction polarization curves, ring current and corresponding current to hydrogen peroxide. (c) Schematic view of Pt-Hg in the extended surface and AR-XPS profile of Pt-Hg. The adventitious C and O traces have been omitted for clarity. (d) Cyclic voltammetry of Pt and Pt-Hg. All electrochemical measurements taken in 0.1 M $HClO_4$ and 50 mVs$^{-1}$. Oxygen reduction measurements were taken with a rotation speed of 1600 rpm.

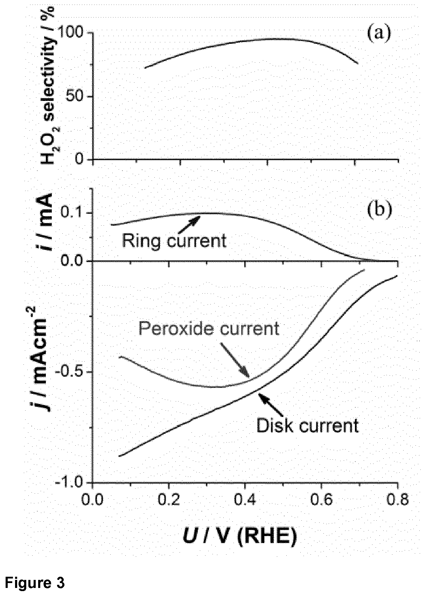

Fig 3 shows experimental characterization of Pt-Hg nanoparticles. (a) $H_2O_2$ selectivity as a function of the applied potential. (b) Oxygen reduction polarization curves, ring current and corresponding current to hydrogen peroxide. Oxygen reduction measurements are taken at 50 mVs$^{-1}$ and 1600 rpm in 0.1 M $HClO_4$.

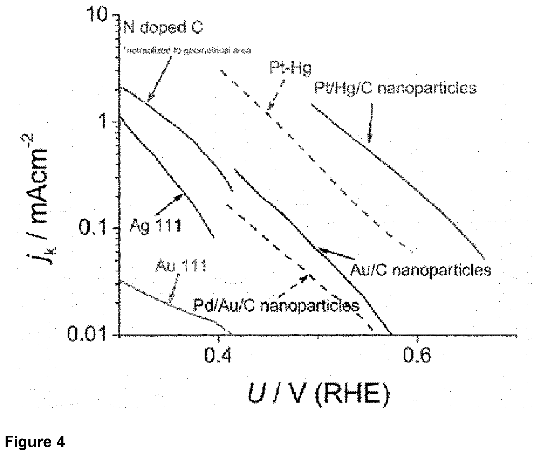

Fig.4. Comparison of various catalysts for $H_2O_2$ synthesis in acidic electrolyte. Data from: N doped C: Fellinger et al, JACS 2012; Ag 111: Blizanac et al, Electrochimica Acta 2007: Au 111: Alvarez-Rizatti et al, J. Electroan. Chem. 1983; and Au/C and Pd/Au/C: Jirkovsky et al, JACS 2012.

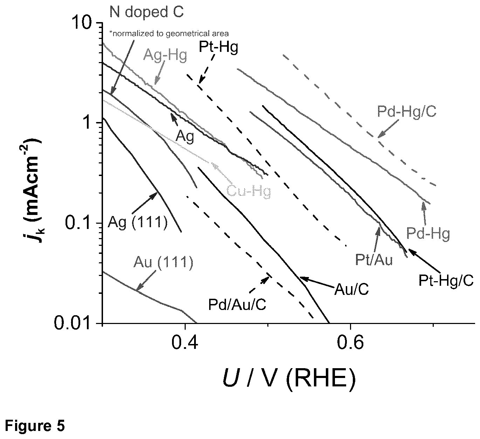

Figure 5. Comparison of various catalysts for $H_2O_2$ synthesis in acidic electrolyte as kinetic current densities as a function of the applied potential. Data from: N doped C: Fellinger et al, JACS 2012; Ag 111: Blizanac et al, Electrochimica Acta 2007: Au 111: Alvarez-Rizatti et al, J. Electroan. Chem. 1983; and Au/C and Pd/Au/C: Jirkovsky et al, JACS 2012.

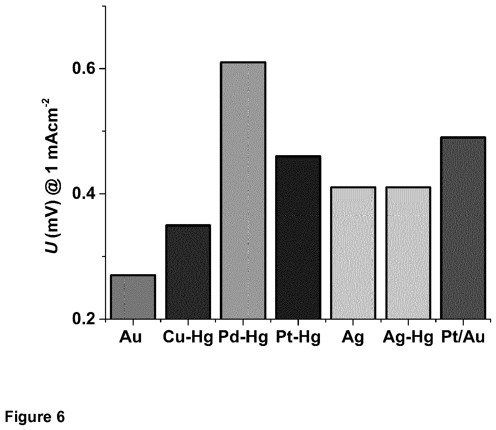

Figure 6 represents the overpotential required to reach 1 mAcm$^{-2}$ of kinetic current to $H_2O_2$ for different materials in the polycrystalline form.

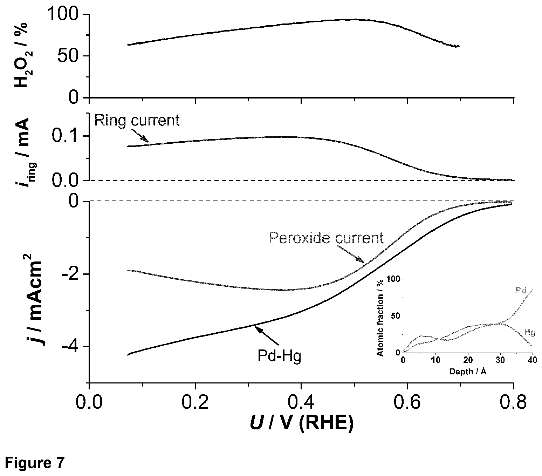

Figure 7 displays oxygen reduction results on a RRDE setup for Pd-Hg in the polycrystalline form. a) is the $H_2O_2$ selectivity as a function of the applied potential. The value is close to 100% for all the studied range, implying a very selective catalyst. (b) represents oxygen reduction polarization curves at the Pd-Hg disk, ring current and corresponding current to hydrogen peroxide at the disk. The overpotential for oxygen reduction is of less than 100 mV, and most of the current corresponds to hydrogen peroxide. The inset shows an AR-XPS profile of Pd-Hg. Both Pd and Hg exist at the electrode surface.

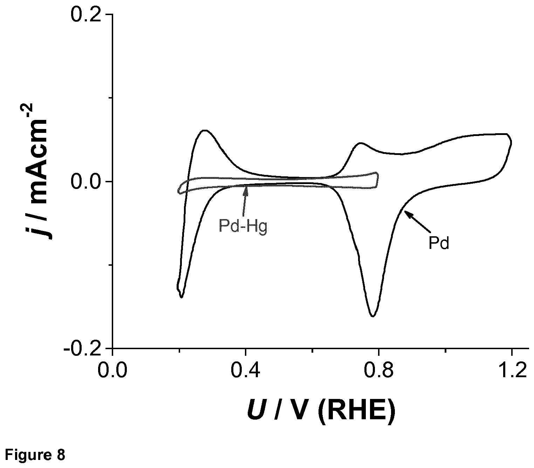

Figure 8 is a cyclic voltammogram for polycrystalline Pd-Hg. The characteristic hydrogen bulk absorption of Pd is minimized in Pd-Hg.

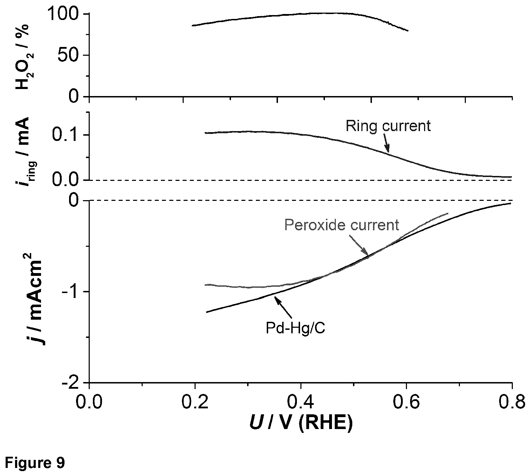

Figure 9 shows oxygen reduction results for Pd-Hg/C nanoparticles. a) is the $H_2O_2$ selectivity as a function of the applied potential. The value is close to 100% for all the studied range, implying a very selective catalyst. (b) represents oxygen reduction polarization curves at the Pd-Hg disk, ring current and corresponding current to hydrogen peroxide at the disk. The overpotential for oxygen reduction is of less than 100 mV, and most of the current corresponds to hydrogen peroxide.

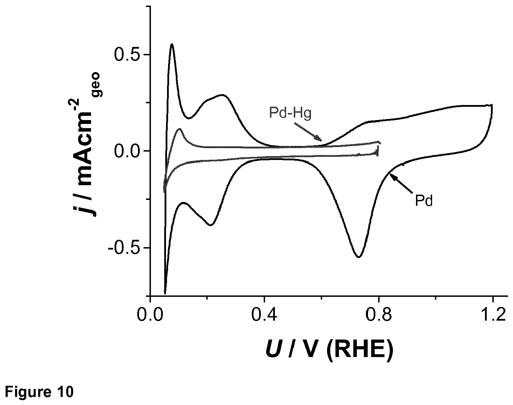

Figure 10 shows a cyclic voltammograms of Pd-Hg/C nanoparticles in nitrogen-saturated solution. As in the extended surface, hydrogen absorption is minimized. Currents are normalized to the geometrical area of the electrodes.

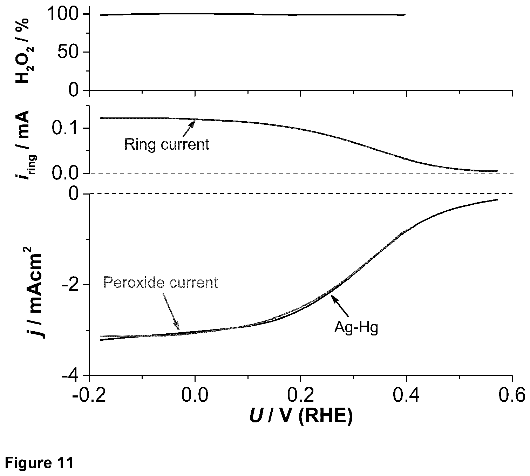

Figure 11 shows oxygen reduction results on a Ag-Hg electrode. a) is the $H_2O_2$ selectivity as a function of the applied potential. The value is close to 100% for all the studied range, implying a very selective catalyst. (b) represents oxygen reduction polarization curves at the Ag-Hg disk, ring current and corresponding current to hydrogen peroxide at the disk.

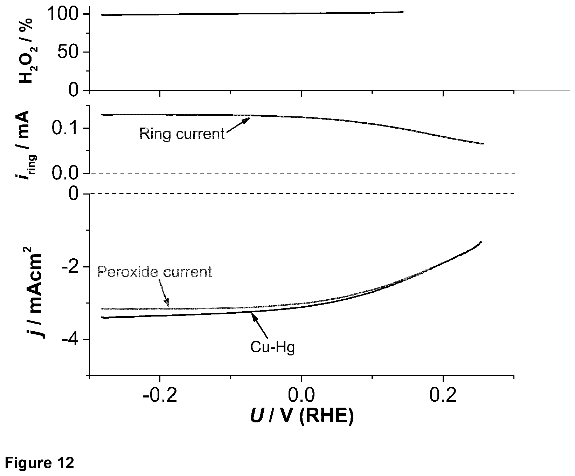

Figure 12 shows oxygen reduction results on a Cu-Hg electrode. a) is the $H_2O_2$ selectivity as a function of the applied potential. The value is close to 100% for all the studied range, implying a very selective catalyst. (b) represents oxygen reduction polarization curves at the Cu-Hg disk, ring current and corresponding current to hydrogen peroxide at the disk. The overpotential for oxygen reduction is of less than 100 mV, and most of the current corresponds to hydrogen peroxide. The inset shows an AR-XPS profile of Pd-Hg. Both Pd and Hg exist at the electrode surface.

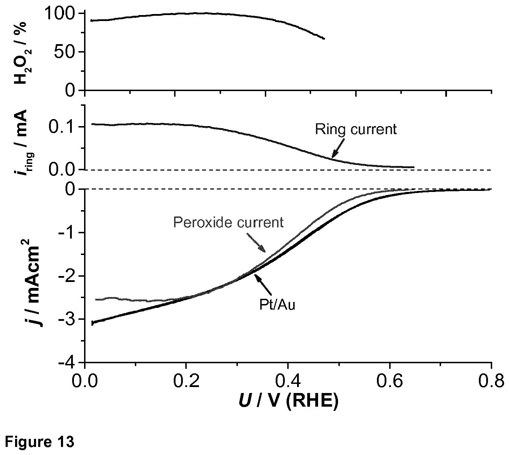

Figure 13 shows oxygen reduction results on a Pt/Au electrode. a) is the $H_2O_2$ selectivity as a function of the applied potential. The value is close to 100% for all the studied range, implying a very selective catalyst. (b) represents oxygen reduction polarization curves at the Pt/Au disk, ring current and corresponding current to hydrogen peroxide at the disk. The overpotential for oxygen reduction is of less than 100 mV, and most of the current corresponds to hydrogen peroxide. The inset shows an AR-XPS profile of Pd-Hg. Both Pd and Hg exist at the electrode surface.

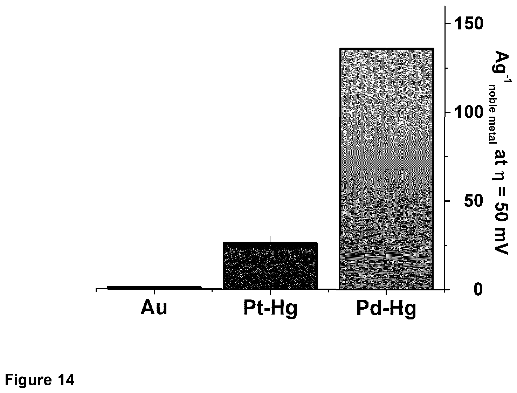

Figure 14 shows the activity per amount of precious metal (Au, Pt or Au) for various carbon-supported electrocatalysts at 0.65 V (RHE).

## Detailed description of the invention

The present invention is as defined in the claims.

The present disclosure relates to an alloy catalyst material. In particular the present disclosure is directed to the alloy material for use in the synthesis of hydrogen peroxide, in which hydrogen peroxide is formed from oxygen and hydrogen or from oxygen and water. Thus the present disclosure is also directed towards a process for producing hydrogen peroxide, a cathode comprising the alloy catalyst material, and an electrochemical cell comprising the cathode.

Accordingly, the present disclosure relates to an alloy catalyst material for use in the electrochemical synthesis of hydrogen peroxide from oxygen and hydrogen or from oxygen and water. In this reaction the alloy catalyst material participates by catalysing the oxygen reduction reaction. The present disclosure does not encompass alloy catalyst material, where the alloy is made of gold and palladium.

The disclosure also relates to an alloy catalyst material for use in the electrochemical synthesis of hydrogen peroxide from oxygen and a proton source selected from the group consisting of hydrogen, water, methanol, ethanol, hydrazine, hydrochloric acid, formic acid, methane, wherein said alloy catalyst material catalyses the oxygen reduction reaction, with the proviso that said alloy catalyst material cannot be an alloy made of gold and palladium.

In some embodiments according to the present disclosure the alloy catalyst material comprises an active metal for catalysing the oxygen reduction reaction, and a more noble metal to preserve the O-O bond, preventing the oxygen molecules from being reduced to water instead of hydrogen peroxide. By the term "active metal" as used herein is meant a site, which is able to adsorb the $O_2$ molecule that is believed to be the first step in the oxygen reduction reaction. By the term "less active metal" as used herein is meant a metal, which is only able to adsorb the $O_2$ molecule to a much lesser extent or not at all. In this way by isolating the sites of active metal so that isolated active spots are formed, only one of the oxygen atoms in the $O_2$ molecule at a time is able to be adsorbed to the catalyst material. It is believed that by preventing both oxygen atoms from being adsorbed simultaneously to the surface of the catalyst material, the electrochemical reduction of oxygen to water is severely supressed or preferably entirely prevented. Consequently, the selectivity for producing hydrogen peroxide is increased. The terms "active metal" or "more active metal" and "less active metal" may also be referred to as "reactive metal" or "more reactive metal" and "less reactive metal". Both sets of terms are understood by the person of skill in the art as it is common to refer to the reactivity of a metal, e.g. noble metals are less reactive.

It is well known in the field that metals become less active in the order: Pt > Ag > Au > Hg (i.e. with Hg being the more inert). Hence, a metal such as for example Ag may in some cases act as the "active metal", whereas in other cases Ag acts as the "less active metal". For example in the alloy $Ag_3Pt$, Ag will act as the "less active metal", whereas in the alloy AgHg, Ag acts as the "active metal". This finding that Ag acts as an active metal in AgHg alloys is very surprising, because oxygen binding energy on silver is considerably weaker than on Pt or Pd (Nørskov, J. K., Rossmeisl, J.; Logadottir, A., Lindqvist, L. Kitchin, J.R., Pedersen, Bligaard, T., Jonsson, H. (2004) Origin of the overpotential for oxygen reduction at a fuel cell cathode; Journal of Physical Chemistry B, vol. 104, pp. 17886-17892).

In some embodiments according to the present disclosure the active metal of the novel alloy catalyst material is selected from the group consisting of ruthenium (Ru), rhodium (Rh), palladium (Pd), platinum (Pt) and copper (Cu), and any combinations thereof. In other embodiments according to the present disclosure the active metal is selected from the group consisting of palladium (Pd), platinum (Pt), copper (Cu) and silver (Ag), and any combinations thereof. Preferably the active metal is selected from the group consisting of palladium (Pd), and platinum (Pt), and any combinations thereof.

In some embodiments according to the present disclosure the less active metal of the novel alloy catalyst material is selected from the group consisting of silver (Ag), gold (Au) and mercury (Hg), and any combinations thereof. Preferably the less active metal is mercury (Hg) or gold (Au), and any combinations thereof.

In some embodiments according to the present disclosure the active metal is selected from the group consisting of palladium (Pd), platinum (Pt), copper (Cu) and silver (Ag) and the less active metal is mercury (Hg).

In other embodiments according to the present disclosure the active metal is selected from the group consisting of platinum (Pt), copper (Cu) and rhodium (Rh) and the less active metal is gold (Au). In a preferred embodiment the active metal is platinum (Pt) and the less active metal is gold (Au).

In other embodiments according to the present disclosure the active metal is selected from the group consisting of palladium (Pd), platinum (Pt) and copper (Cu) and the less active metal is silver (Ag).

In other embodiments according to the present disclosure the active metal is palladium (Pd) and the less active metal is selected from the group consisting of silver (Ag) and mercury (Hg).

In other embodiments according to the present disclosure the active metal is platinum (Pt) and the less active metal is selected from the group consisting of silver (Ag), gold (Au) and mercury (Hg).

In other embodiments according to the present disclosure the active metal is copper (Cu) and the less active metal is selected from the group consisting of silver (Ag), gold (Au) and mercury (Hg).

In other embodiments according to the present disclosure the active metal is silver (Ag) and the less active metal is mercury (Hg).

In other embodiments according to the present disclosure the active metal is ruthenium (Ru) and the less active metal is silver (Ag) or gold (Au).

In other embodiments according to the present disclosure the active metal is rhodium (Rh) and the less active metal is gold (Au)

In yet other embodiments according to the present disclosure the alloy catalyst material is selected from the group consisting of $PtHg_4$, $PdHg_4$, CuHg, $PtAg_3$, CuAg, $PdAg_3$, CuAu, PtAu and RhAu.

In yet other embodiments according to the present disclosure the alloy catalyst material is selected from the group consisting of an alloy consisting of Pt and Hg, an alloy consisting of Pd and Hg, an alloy consisting of Cu and Hg, an alloy consisting of Ag and Hg and alloy consisting of Pt and Au.

The present disclosure also relates to a cathode for use in the electrochemical synthesis of hydrogen peroxide from oxygen and hydrogen, or from oxygen and water, where said cathode comprises the alloy catalyst material as defined above. The cathode is also for the production of hydrogen peroxide from oxygen and a proton source selected from the group comprising hydrogen, water, methanol, ethanol, hydrazine, hydrochloric acid, formic acid, and methane.

In some embodiments according to the present disclosure the cathode may comprise the alloy catalyst material, which may be formed as nanoparticles. By the term "nanoparticles" as used herein is meant particles having a particle size less than 100 nm, preferably less than 10 nm, such as less than 5 nm. In a preferred embodiment according to the present disclosure the size of the particles lies in the range of 3 - 5 nm.

In some embodiments according to the present disclosure the cathode also comprises a carrier material, which will make up the core of the cathode, the alloy catalyst material is deposited on the carrier material. Suitable examples of carrier materials include titanium dioxide, zirconium dioxide and iron oxides based materials, silicon carbide, and carbon, preferably carbon. Carbon support may be selected from various types of carbon such as graphite, carbon black, glassy carbon, activated carbon, highly oriented pyrolytic graphite (HOPG) and single-walled and multi-walled carbon nanotubes, especially from carbon black and activated carbon. The carrier may be porous or non-porous, preferably porous. Carbon may be activated by grafting with at least amino, polyamines or phosphorous containing functional groups.

In other embodiments according to the present disclosure the cathode is formed as a thin film of the alloy catalyst material.

In principle, the cathode comprising the catalyst deposited on a carrier material may be produced by two different methods.

The first method includes direct deposition of the metals onto the catalyst support. The metals are typically used in the form of a dispersion in an aqueous or organic medium, generally in the form of an aqueous dispersion. This dispersion is advantageously a colloidal dispersion, i.e. a suspension (or colloid) of sub-micrometre-sized particles of the two metals in a fluid. A skilled person would know how to perform this method.

The second method includes adsorption of metal precursors onto the catalyst support, followed by their reduction, in situ, at the surface of the catalyst support. Typically, the metal precursors are the metal salt of the metal of interest. Said metal precursors are then transformed into metals via heat treatment, chemical reduction in the presence of a reducing agent, or electrochemical reduction (electrodeposition). This method is also well known by a skilled person.

It is also possible to combine these two methods, for instance by applying one of the metals by direct deposition and then apply the other metal in form of its precursor, which is subsequently reduced due to heat treatment, reduction with a reducing agent and/or electrochemical reduction.

Other suitable examples of methods for producing the cathode comprising the catalyst material is described for example in "Pt-Cd and Pt-Hg Phases As High Activity Catalysts for Methanol and Formic Acid Oxidation", Tanushree Ghosh , Qin Zhou , John M. Gregoire , R. Bruce van Dover and F. J. DiSalvo, JPC C 2008.

It lies within the skills of an ordinary practitioner to produce cathodes made of alloy catalyst materials.

The present disclosure also relates to an electrochemical cell comprising the cathode of the present disclosure. The electrochemical cell is used for synthesising hydrogen peroxide from oxygen and hydrogen or from oxygen and water or from oxygen and a proton source selected from the group comprising or consisting of hydrogen, water, methanol, ethanol, hydrazine, hydrochloric acid, formic acid, and methane.

The electrochemical cell may be designed in any kind of design known in the art. In some embodiments according to the present disclosure, however, the electrochemical cell is selected from the group consisting of a fuel cell, in particular a hydrogen fuel cell or a proton exchange membrane fuel cell or a proton exchange membrane electrolyser.

The electrochemical cell comprising the cathode of the present disclosure, i.e. the $H_2O_2$ producing device, may consist of a stack of individual cells. In a fuel cell mode i.e. with $H_2$ oxidation at the anode and $O_2$ reduction to $H_2O_2$ at the cathode, the thermodynamic cell potential would be 0.7 V (0.7 V for oxygen reduction at the cathode and 0 V for hydrogen oxidation at the anode, both with respect to a reversible hydrogen electrode (RHE)). The cathode would be operated between 0 and 0.7 V RHE, and the anode would be operated above 0 V, which would give a maximum theoretical output voltage of 0.7 V, or taking losses into account it could be smaller. Thus the output voltage would be between 0 and 0.7 V

Also, if carrying out an alternative reaction to hydrogen oxidation, such as borohydride oxidation, the thermodynamic potential could be larger. Thus the output voltage would be between 0 V and 1.1V.

In an electrolyser with water oxidation occurring at the anode above 1.2 V and oxygen reduction to $H_2O_2$ at the cathode occurring below 0.7 V, the theoretical thermodynamic cell potential would be 0.5 V. Alternative anode reactions could be utilised, such as chlorine evolution. Depending on the different losses, the cell potential of a $H_2O_2$ producing electrolyser could be as high as 2 V. Thus the electrochemical cell potential for $H_2O_2$ production could be between 0.2 and 2 V, such as between 0.6 and 2 V, such as between 0.7 and 2.0 V, such as between 0.8 V and 2.0 V

Thus in an embodiment according to the present disclosure the electrochemical cell potential for $H_2O_2$ production is lower than 2 V.

In particular, it would be advantageous if the electrochemical cell is designed so as to be suitable for on-site production of hydrogen peroxide. By such a design it is possible to reduce costs for transporting the hydrogen peroxide and a more effective usage of the produced hydrogen peroxide is obtained because loss of hydrogen peroxide during storage is minimised.

The present disclosure also relates to a process for producing hydrogen peroxide from oxygen and hydrogen or from oxygen and water, wherein the alloy catalyst material of the present disclosure is used as a catalyst for the oxygen reduction reaction. In particular the alloy cathode may be designed according to the present disclosure as described above.

The present disclosure also relates to the use of the alloy catalyst material of the present disclosure in the synthesis of hydrogen peroxide, wherein the hydrogen peroxide is synthesised from oxygen and hydrogen,

or from oxygen and water. In particular the present disclosure relates to the use, where the synthesis is performed in an electrochemical cell of the present disclosure and where the electrochemical cell comprises the cathode of the present disclosure. The hydrogen peroxide may suitably be used in textile, pulp and paper bleaching and in organic synthesis, such as for example the synthesis of propylene oxide, and in the manufacture of inorganic chemicals and detergents.

In the description above the present disclosure has been disclosed as a synthesis of hydrogen peroxide, where the hydrogen peroxide is synthesised from oxygen and hydrogen, or from oxygen and water. A skilled person would know that in such synthesis, hydrogen and water, respectively, act as a source of protons, and that other protons sources, such as for example methanol, ethanol, hydrazine, hydrochloric acid, formic acid, methane and the like, may be used instead as obvious alternative proton sources. Hence, in its broadest concept the term "wherein the hydrogen peroxide is synthesised from oxygen and hydrogen, or from oxygen and water" as used herein is meant that hydrogen peroxide is synthesised from oxygen and a proton source. Examples of proton sources include hydrogen, water, methanol, ethanol, hydrazine, hydrochloric acid, formic acid and methane. Preferred examples include hydrogen and water. Preferably, the electrolyte comprises 0.05% to 100% water, such as 0.05% to 99.5% water, such as 0.1% to 100% water, such as 0.1% to 99% water, such as 1% to 100% water, such as 1% to 99% water, such as 2% to 100% water, such as 2% to 99% water such as 5% to 100%, 5% to 99% water, 10% to 100% water, 10% to 99% water, 15% to 100% water, 15% to 99% water, 20% to 100% water, 20% to 99% water, 25% to 100% water, 25% to 99% water, 30% to 100% water, 30% to 99% water, 35% to 100%, 35% to 99% water, 40% to100% water, 40% to 99% water and so forth. 100% water is to be understood as the electrolyte essentially is water. In an embodiment according to the present disclosure the percentages are weight by volume. In an embodiment according to the present disclosure the electrolyte comprises salt and/or ions. Typical examples of salts and/or ions include but are not limited to hydrogen (H+), sodium (Na+), potassium (K+), calcium (Ca2+), magnesium (Mg2+), chloride (Cl-), oxygen (O2-), hydroxide (OH-), hydrogen phosphate (HPO42-), and hydrogen carbonate (HCO3-) and HClO4 and HgClO4. The person of skill in the art is knowledgeable of which salts and ions are applicable.

Thus an embodiment of the present disclosure relates to a process for the electrochemical synthesis of hydrogen peroxide from an electrolyte comprising water wherein an alloy catalyst material catalyses the oxygen reduction reaction,

with the proviso that said alloy catalyst material cannot be an alloy made of gold and palladium. Preferably, the water content of the electrolyte is between 0.05% and 100% water. In another preferred embodiment according to the present disclosure, the electrolyte is water.

## Examples

The inventors of the present disclosure have tested alloy catalysts, such as $PtHg_4$, with isolated active sites. First, the inventors have calculated theoretical stability and formation energy of the possible intermediates of the oxygen reduction reaction and evaluated the new alloy catalyst materials towards production of hydrogen peroxide.

These theoretical results are found in the volcano plot (figure 1) together with the isolated active site catalysts found in the literature. More detailed information on how to construct and read the volcano plot can be found in the article of Siahrostami et al. ("Enabling direct H2O2 Synthesis Via Rational Electrocatalyst Design" to be submitted and published), but in general the volcano plot shows the binding energy of one of the reaction intermediates in the X-axis against the activity of a catalyst. The balance between binding too strong and binding too weak the intermediates gives rise to an optimal value for the binding energy where maximum activity is achieved.

The tested alloys can be summarized in three different categories. In the first category (circles) less active closely packed Au surfaces is applied to make single site of Pt, Pd, Rh and Ru. The second category embraces closely packed active Pt, Pd and Rh surfaces and make a surface alloy of inert Au, Ag and Hg to isolate surface atoms of the active metals (triangles). The third category relates to intermetallic compounds (buls alloys) of Pt and Pd with Hg and Ag (squares).

The volcano plot clearly shows that $PtHg_4$ and $PtAg_3$ stand out as the most active candidates fulfilling the stability criteria.

## Example 1. Computational screening

## Computational Details

The computational analysis carried out using GPAW, a DFT code based on projected augmented wave (all electron frozen core approximation) method integrated with Atomic Simulation Environment (ASE). The revised Perdew-Burke-Ernzerhof (RPBE) was used as exchange correlation functional. The (111) facet of surface alloys and bulk alloys with face-centered cubic (fcc) crystal structure, i.e. $Ag_3Pt$, $Ag_3Pd$ and $Au_3Pd$ were modelled

using four-layer $2 \times 2$ and $\left(\sqrt{3} \times \sqrt{3}\right)R30°$ periodically repeated slabs respectively, separated by at least 16 Å vacuum between successive slabs. The lattice constants of the surface alloys were assumed to be as the same as that of host metals. An eight-layer $1 \times 1$ slab with 17.5 Å vacuum between successive slabs was used to model $PtHg_4$ (110) surface. Monkhorest-pack grids with dimensions $6 \times 6 \times 1$, $6 \times 6 \times 1$ and $4 \times 4 \times 1$ were used to sample Brillouin zones of surface $2 \times 2$,

$$\left(\sqrt{3} \times \sqrt{3}\right)R30^\circ$$

and $4 \times 4 \times 1$ structures respectively. During structure relaxation of fcc-alloys and PtHg$_4$ (110), the bottom two and four layers were fixed in their bulk structure respectively, while the upper layers and adsorbates were allowed to relax in all direction until all residual forces were less than 0.05 eV / Å in all directions. For all calculations, adsorption was only allowed on one side of the slabs. Moreover, in all cases, convergence of total energy with respect to grid spacing and k point set were considered.

**Example 2. Experimental testing the PtHg$_4$ alloy catalyst material**

**Extended surface electrode preparation**

A platinum polycrystalline electrode was mirror polished to >0.25 μm prior to every experiment and prepared as reported in Verdaguer-Casadevall et al, Journal of Power Sources 2012 Volume 220, Pages 205-210. In short, the electrode was flame annealed at ca. 800 C for 2 min and let cool down under a stream of Argon for 5 min. It was then covered with a droplet of hydrogenated water and embedded into the rotating ring-disk electrode (RRDE) setup. Several voltammograms in nitrogen saturated 0.1 M HClO$_4$ were recorded to ensure a reproducible surface, and then the electrode was moved to an electrodeposition cell containing 0.1 M HClO$_4$ + 1 mM HgClO$_4$. The potential was swept from open circuit (ca. 1 V) at 50 mVs$^{-1}$ to 0.2 V, where the potential was stopped for 2 minutes to electrodeposit mercury following the procedure detailed by Wu et al, Electrochimica Acta, 2008 Volume 10 pages 5961-5967. The potential was scanned to 0.8 V at 50 mV s$^{-1}$ and stopped there while removing the electrode from the cell. We immediately moved the Hg-modified Pt electrode back into the RRDE cell, where it was then inserted under potential control of ca. 0.1 V in N$_2$-saturated 0.1 M HClO$_4$. Then the potential was swept between 0.05 and 0.65 V until a stable cyclic voltammogram was obtained. As we observed some mercury spontaneous deposition at the ring, we cleaned it electrochemically by cycling it at 500 mV s$^{-1}$ between 0.05 and 1.6 V while rotating the electrode at 1600 rpm to avoid mercury re-deposition. Once the ring and disk voltammetries became stable, we saturated the cell with O$_2$ to record polarization curves in the disk while keeping the ring at 1.2 V to detect H$_2$O$_2$.

**High surface area catalysts**

To prepare the Pt/C nanoparticles a simple synthesis method was employed. 5.75 mg of 60 % wt. Pt supported on C (ETEK) were mixed with 9.5 mL of milipore water, 3 mL of isopropanol and 50 μL of nafion. 20 μL of 2 % wt. solution of PVP was used to facilitate dispersion of the nanoparticles. The mixture was sonicated for 20 mins at ca 25 ºC and 10 μL of it were dropcasted on top of a glassycarbon of 0.196 cm$^2$. The sample was left to dry overnight. Then it was embedded into a RRDE setup. The same procedure adopted for the polycrystalline sample was followed to electrodeposit mercury. All data relative to nanoparticles was normalized to the H-upd area before Hg deposition, and the corresponding capacitance was substracted from all oxygen reduction measurements. To ensure a good dispersion of the film oxygen reduction was carried out on the Pt/C nanoparticles.

**Chemicals**

Concentrated HClO$_4$ was obtained from Merck and diluted to 0.1 M. HgClO$_4$ was obtained from Sigma Aldrich and diluted into 0.1 M HClO$_4$ to reach 1 mM HgClO$_4$. All gases were of 5N5 quality and purchased from AGA.

**Electrochemical measurements**

A typical three-electrode cell was used for the RRDE experiments. A smaller three-electrode cell (15 mL of volume) was used to electrodeposit mercury. In both cells the counter electrodes were Pt wires and Hg/Hg$_2$SO$_4$ electrodes were used as a reference, separated from the working electrode compartment using a ceramic frit. All potentials are quoted with respect to the reversible hydrogen electrode (RHE), and are corrected for Ohmic losses. All experiments were performed using a Bio-Logic Instruments' VMP2 potentiostat, controlled by a computer. The rotating ring disk electrode (RRDE) assembly was provided by Pine Instruments Corporation. The ring was made of platinum. All electrochemical measurements have been conducted at room temperature in 0.1 M HClO$_4$ and 50 mV s$^{-1}$. Oxygen reduction measurements have been recorded at a rotation speed of 1600 rpm.

**XPS measurements**

Angle Resolved X-Ray Photoelectron Spectroscopy (AR-XPS) measurements were taken on a Theta Probe instrument (Thermo Scientific). The Ultra High Vacuum (UHV) chamber had a base pressure of 5 x 10$^{-10}$ mbar. The X-ray source is monochromatized Al Kα (1486.7 eV), giving a resolution better than 1.0 eV at the employed pass energy of 100 eV. The analyzer has an acceptance angle of 60°, between 20° and 80° to the surface normal. For the angle resolved profiles, 16 different channels were analyzed in parallel, without tilting the sample: this corresponds to 3.75° wide angle intervals. Angle resolved data were processed using the simulation tool, ARProcess (Thermo Avantage software), which uses a maximum entropy method combined with a genetic algorithm to define the depth profiles: angles over 65° were omitted to minimize the effects of elastic scattering.

**Discussion**

From DFT calculations we conclude that several catalysts should present a low overpotential for oxygen reduction to hydrogen peroxide while simultaneously displaying a high selectivity.

In particular, we experimentally tested Pt-Hg to confirm the theoretical model works. We did so in both extended surfaces and nanoparticles by carrying out oxygen reduction measurements on a rotating ring-disk electrode setup.

Figure 2 shows results for the extended surface. (a) displays $H_2O_2$ selectivity as a function of the applied potential. The value is close to 100% for all the studied range, implying a very selective catalyst. (b) represents oxygen reduction polarization curves at the Pt-Hg disk, ring current and corresponding current to hydrogen peroxide at the disk. The overpotential for oxygen reduction is of only 100 mV, and most of the current corresponds to hydrogen peroxide. (c) shows an AR-XPS profile of Pt-Hg. Both Pt and Hg exist at the electrode, and Hg is deep in the catalyst by more than 30 Å. In (d) a cyclic voltammetry of Pt and Pt-Hg is shown. Pt presents characteristic H-upd peaks which are inexistent in Pt-Hg, characteristic for isolated Pt atoms.

Figure 3 shows electrochemical results for carbon supported nanoparticles of Pt-Hg. (a) displays the selectivity of the catalyst; (b) the oxygen reduction polarization curves and the corresponding current to hydrogen peroxide. As with the extended surface, most of the current at the disk corresponds to oxygen reduction to hydrogen peroxide.

Pt-Hg presents the best activity on a metallic catalyst ever reported for electrochemical hydrogen peroxide synthesis. In particular, when comparing the activity to that of previously known Au or Pd/Au catalysts, Pt-Hg nanoparticles display an enhancement of one order of magnitude per surface area (see figure 4). For instance, at 0.55 V the activity of Au or Pd/Au nanoparticles was of 0.023 mA cm$^{-2}$, while for Pt-Hg nanoparticles that value is of 0.55 mA cm$^{-2}$. In terms of activity per mass of noble metal, at 0.55 V Au presents an activity of 0.01 mA$\mu$g$_{Au}$$^{-1}$, while Pt-Hg has an activity of 0.24 mA$\mu$g$_{Pt}$$^{-1}$.

**Example 3**

**Experimental testing of Pd-Hg electrode material**

A palladium polycrystalline electrode was mirror polished to >0.25 $\mu$m prior to every experiment and prepared by induction heating at ca. 700 C in an Ar atmosphere for 2 min and let cool down under a stream of Argon for 5 min. It was then covered with a droplet of water and embedded into the rotating ring-disk electrode (RRDE) setup. Several voltammograms in nitrogen saturated 0.1 M HClO$_4$ were recorded to ensure a reproducible surface, and then the electrode was moved to an electrodeposition cell containing 0.1 M HClO$_4$ + 1 mM HgClO$_4$. The potential was swept from open circuit (ca. 1 V) at 50 mVs$^{-1}$ to 0.2 V, where the potential was stopped for 2 minutes to electrodeposit mercury following the procedure detailed by Wu et al, Electrochimica Acta, 2008 Volume 10 pages 5961-5967. The potential was scanned to 0.8 V at 50 mV s$^{-1}$ and stopped there while removing the electrode from the cell. The Hg-modified Pd electrode was then immediately moved back into the RRDE cell, where it was then inserted under potential control of ca. 0.1 V in N$_2$-saturated 0.1 M HClO$_4$. Then the potential was swept between 0.05 and 0.65 V until a stable cyclic voltammogram was obtained. Some mercury spontaneous deposition was observed at the ring, and therefore it was cleaned electrochemically by cycling it at 500 mV s$^{-1}$ between 0.05 and 1.6 V while rotating the electrode at 1600 rpm to avoid mercury re-deposition. Once the ring and disk voltammetries became stable, the cell was saturated with O$_2$ to record polarization curves in the disk while keeping the ring at 1.2 V to detect H$_2$O$_2$.

**High surface area Pd-Hg/C**

To prepare the Pd-Hg/C nanoparticles a simple synthesis method was employed. 4.16 mg of 60 % wt. Pd supported on C (ETEK) were mixed with 10 mL of milipore water, 3 mL of ethanol and 50 $\mu$L of 1:100 nafion. 20 $\mu$L of 2 % wt. solution of PVP was used to facilitate dispersion of the nanoparticles. The mixture was sonicated for 20 min at ca. 25 ºC and 10 $\mu$L of it was dropcasted on top of a glassycarbon disk of 0.196 cm$^2$. The sample was then left to dry before embedding it into a RRDE setup. To ensure a good dispersion of the film oxygen reduction was carried out on the Pd/C nanoparticles. The same procedure adopted for the polycrystalline sample was followed to electrodeposit mercury. All data relative to surface area of nanoparticles were normalized to the oxide reduction peak before Hg deposition, and the corresponding capacitance was subtracted from all oxygen reduction measurements.

**Experimental testing of Ag-Hg electrode material**

A silver polycrystalline electrode was mirror polished to >0.25 $\mu$m prior to every experiment and prepared by induction heating at ca. 650 C in a 5% H$_2$/Ar atmosphere for 2 min and let cool down. It was then covered with a droplet of hydrogenated water and embedded into the rotating ring-disk electrode (RRDE) setup. Several voltammograms in nitrogen saturated 0.1 M HClO$_4$ were recorded to ensure a reproducible surface, and then the electrode was moved to an electrodeposition cell containing 0.1 M HClO$_4$ + 1 mM HgClO$_4$. The potential was swept from open circuit (ca. 0.6 V) at 50 mVs$^{-1}$ to 0.2 V, where the potential was stopped for 2 minutes to electrodeposit mercury following the procedure detailed by Wu et al, Electrochimica Acta, 2008 Volume 10 pages 5961-5967. The potential was scanned to open circuit at 50 mV s$^{-1}$ and stopped there while removing the electrode from the cell. The Hg-modified Ag electrode was immediately moved back into the RRDE cell, where it was then inserted under potential control of ca. 0.1 V in N$_2$-saturated 0.1 M HClO$_4$. Then the potential was swept between 0.05 and 0.55 V until a stable cyclic voltammogram was obtained. Some mercury spontaneous deposition was observed at the ring, and therefore it was cleaned electrochemically by cycling it at 500 mV s$^{-1}$ between 0.05 and 1.6 V while rotating the electrode at 1600 rpm to avoid mercury re-deposition. Once the ring and disk voltammetries became stable, the cell was saturated with O$_2$ to record polarization curves in the disk while keeping the ring at 1.2 V to detect H$_2$O$_2$.

**Experimental testing of Cu-Hg electrode material**

A copper polycrystalline electrode was electropolished in 85 % ortophosporic acid at 2.1 V against a Pt counter electrode (placed at approximately 1 cm of distance). Traces of Cu ions and phosphoric acid were removed by putting the electrode in dearated water for ~ 1 min. It was then covered with a droplet of hydrogenated water and embedded into the rotating ring-disk electrode (RRDE) setup. Several voltammograms in nitrogen saturated 0.1 M HClO$_4$ were recorded to ensure a reproducible surface, and then the electrode was moved to an electrodeposition cell containing 0.1 M HClO$_4$ + 1 mM HgClO$_4$. The potential was swept from open circuit (ca. 0.25 V) at 50 mVs$^{-1}$ to 0.2 V, where the potential was stopped for 2 minutes to electrodeposit mercury following the procedure detailed by Wu et al, Electrochimica Acta, 2008 Volume 10 pages 5961-5967. The potential was scanned to open circuit at 50 mV s$^{-1}$ and stopped there while removing the electrode from the cell. The Hg-modified Cu electrode was immediately moved back into the RRDE cell, where it was then inserted under potential control of ca. 0.1 V in N$_2$-saturated 0.1 M HClO$_4$. Then the potential was swept between -0.3 and 0.25 V until a stable cyclic voltammogram was obtained. Some mercury spontaneous deposition was observed at the ring, and therefore it was cleaned electrochemically by cycling it at 500 mV s$^{-1}$ between 0.05 and 1.6 V while rotating the electrode at 1600 rpm to avoid mercury re-deposition. Once the ring and disk voltammetries became stable, the cell was saturated with O$_2$ to record polarization curves in the disk while keeping the ring at 1.2 V to detect H$_2$O$_2$.

**Preparation of Pt/Au electrode material**

A gold polycrystalline electrode was mirror polished to >0.25 μm prior to every experiment and prepared by induction heating at ca. 650 C in a 5% H$_2$/Ar atmosphere for 2 min. It was then covered with a droplet of hydrogenated water and embedded into the rotating ring-disk electrode (RRDE) setup. Several voltammograms in nitrogen saturated 0.1 M HClO$_4$ were recorded to en-

sure a reproducible surface, and then the electrode was moved to an electrodeposition cell containing 0.1 M HClO$_4$ + 0.1 mM H$_2$PtCl$_6$. The electrode was kept there for 2 minutes without any applied potential to spontaneously deposit submonolayer amounts of Pt. The Pt-modified Ag electrode was immediately moved back into the RRDE cell, where it was then inserted under potential control of ca. 0.1 V in N$_2$-saturated 0.1 M HClO$_4$. Then the potential was swept between 0.05 and 1 V until a stable cyclic voltammogram was obtained. Once the disk voltammetries became stable, the cell was saturated with O$_2$ to record polarization curves in the disk while keeping the ring at 1.2 V to detect H$_2$O$_2$.

**Discussion**

In particular, we experimentally tested various electrodes including Pt-Hg, Pd-Hg, Ag-Hg, Cu-Hg and Pt/Au. All the samples were tested in flat extended surfaces, while the most promising ones were as well studied in the nanoparticulate form. Measurements were performed on a rotating ring-disk electrode setup.

As figures 7, 9 and 11-13 show all the materials tested had a high selectivity for H$_2$O$_2$ production over water. In terms of activity (i.e. current density at a certain overpotential), changing the electrode material had a strong effect. In particular, the best activities were found for Pd-Hg electrodes, followed by Pt/Au, Pt-Hg, Ag-Hg and Cu-Hg (figures 5 and 6). In figure 6 the potential at which 1 mAcm$^{-2}$ of kinetic current density is reached is plotted for the different materials, as tested for electrodes in the polycrystalline form. For Pd-Hg this potential is of 0.61 V, while for Pt/Au, Pt-Hg, Ag-Hg and Cu-Hg it is of 0.5, 0.46, 0.41 and 0.35, respectively. Notably, for pure Au the activity is lower than for all these electrodes, with the potential being 0.27 V (Jirkovsky, S., Halasa, M., Schiffrin, D. J., (2010), Kinetics of electrocatalytic reduction of oxygen and hydrogen peroxide on dispersed gold nanoparticles, Physical Chemistry Chemical Physics, vol. 12, pages 8042-8053).

In the nanoparticulate form, as reported in figure 14, at 50 mV of overpotential the mass activities (i.e. A/g of precious metal) are of 139 A/g for Pd-Hg/C, 26 A/g for Pt-Hg/C and of 1A/g for Au/C. Notably, the increase in mass activity over Au/C is of over an order of magnitude for Pt-Hg/C and over two orders of magnitude for Pd-Hg/C.

**Claims**

1. A process for the electrochemical synthesis of hydrogen peroxide from an electrolyte comprising water wherein an alloy catalyst material catalyses the oxygen reduction reaction,
   wherein the alloy catalyst material comprises an active metal for catalysing the oxygen reduction, and a less active metal for preserving the O-O bond,

wherein the active metal is selected from the group consisting of copper (Cu), ruthenium (Ru), rhodium (Rh), palladium (Pd), and platinum (Pt), and any combinations thereof, and
wherein the less active metal is selected from the group consisting of gold (Au) and mercury (Hg), and any combinations thereof,
with the proviso that said alloy catalyst material cannot be an alloy made of gold and palladium.

2. The process according to claim 1, wherein the water content of the electrolyte is between 0.05% and 100% water.

3. The process according to claim 1 or 2, wherein the electrolyte is water.

4. The process according to claim 1, wherein hydrogen peroxide is synthesized from oxygen and hydrogen, or oxygen and water, or oxygen and a proton source selected from the group comprising or consisting of hydrogen, water, methanol, ethanol, hydrazine, hydrochloric acid, formic acid, and/or methane.

5. The process according to claims 1 to 4, wherein the electrochemical cell potential for hydrogen peroxide production is lower than 2.0 V, such as between 0.2 and 2.0 V, or between 0.7 and 2.0 V.

6. Use of an alloy catalyst material for the electrochemical synthesis according to claims 1 to 5, wherein said material comprises an active metal for catalysing the oxygen reduction reaction, and a less active metal for preserving the O-O bond, wherein the active metal is selected from the group consisting of copper (Cu), ruthenium (Ru), rhodium (Rh), palladium (Pd), and platinum (Pt) and any combinations thereof, and
wherein the less active metal is selected from the group consisting of gold (Au) and mercury (Hg) and any combinations thereof,
with the proviso that said material cannot be an alloy made of gold and palladium, and wherein the alloy catalyst material is in the form of nanoparticles having a particle size less than 100 nm, preferably less than 10 nm or 5 nm, or more preferably particles in the range of 3 to 5 nm,
wherein the alloy catalyst material has a surface structure wherein the active metal is forming isolated active spots within the less active material.

7. The use according to claim 6, wherein the material is selected from combinations of platinum (Pt) and mercury (Hg); ; palladium (Pd) and mercury (Hg); copper (Cu) and mercury (Hg); silver (Ag) and mercury (Hg); , platinum (Pt) and gold (Au).

8. The use according to claims 6 to 7, wherein the alloy catalyst material is used for a cathode use in the electrochemical synthesis of hydrogen peroxide from oxygen and hydrogen, or from oxygen and water.

9. The use according to claim 8, wherein the alloy catalyst material is deposited on a carrier material.

10. The use according to any of claims 8 to 9, wherein the cathode is used for an electrochemical cell for synthesising hydrogen peroxide according to the process of claims 1 to 4.

11. The use according to claim 10, wherein the electrochemical cell is selected from the group consisting of a proton exchange membrane electrolyser and a fuel cell, in particular a hydrogen fuel cell or a proton exchange membrane fuel cell.

12. A process for producing hydrogen peroxide from oxygen and hydrogen, or from oxygen and water, wherein an alloy catalyst material is used as a catalyst for the oxygen reduction reaction, wherein the alloy catalyst material comprises an active metal for catalysing the oxygen reduction reaction, and a less active metal for preserving the O-O bond,
wherein the active metal is selected from the group consisting of copper (Cu),
ruthenium (Ru), rhodium (Rh), palladium (Pd), and platinum (Pt) and any combinations thereof, and
wherein the less active metal is selected from the group consisting of gold (Au) and mercury (Hg) and any combinations thereof,
with the proviso that said material cannot be an alloy made of gold and palladium, and wherein the alloy catalyst material is in the form of nanoparticles having a particle size less than 100 nm, preferably less than 10 nm or 5 nm, or more preferably particles in the range of 3 to 5 nm,
wherein the alloy catalyst material has a surface structure wherein the active metal is forming isolated active spots within the less active material.

**Patentansprüche**

1. Verfahren zur elektrochemischen Synthese von Wasserstoffperoxid aus einem wasserhaltigen Elektrolyten, wobei ein Legierungskatalysatormaterial die Sauerstoffreduktionsreaktion katalysiert,
wobei das Legierungskatalysatormaterial ein aktives Metall zum Katalysieren der Sauerstoffreduktion und ein weniger aktives Metall zum Konservieren der O-O-Bindung umfasst,
wobei das aktive Metall aus der Gruppe bestehend aus Kupfer (Cu), Ruthenium (Ru), Rhodium (Rh), Palladium (Pd) und Platin (Pt) und beliebigen Kombinationen davon ausgewählt ist und wobei das weniger aktive Metall aus der Gruppe bestehend aus Gold (Au) und Quecksilber (Hg) und beliebigen Kombinationen davon ausgewählt ist,

mit der Maßgabe, dass das Legierungskatalysatormaterial keine Legierung aus Gold und Palladium sein kann.

2. Verfahren nach Anspruch 1, wobei der Wassergehalt des Elektrolyten zwischen 0,05 % und 100 % Wasser ist.

3. Verfahren nach Anspruch 1 oder 2, wobei der Elektrolyt Wasser ist.

4. Verfahren nach Anspruch 1, wobei das Wasserstoffperoxid aus Sauerstoff und Wasserstoff, oder Sauerstoff und Wasser, oder Sauerstoff und einer Protonenquelle, aus der Gruppe bestehend aus Wasserstoff, Wasser, Methanol, Ethanol, Hydrazin, Salzsäure, Ameisensäure und / oder Methan ausgewählt ist, synthetisiert wird.

5. Verfahren nach den Ansprüchen 1 bis 4, wobei das Potenzial der elektrochemischen Zelle für eine Wasserstoffperoxidherstellung niedriger als 2,0 V ist, beispielsweise zwischen 0,2 und 2,0 V oder zwischen 0,7 und 2,0 V.

6. Verwendung eines Legierungskatalysatormaterials für die elektrochemische Synthese nach den Ansprüchen 1 bis 5, wobei das Material ein aktives Metall zum Katalysieren der Sauerstoffreduktionsreaktion und ein weniger aktives Metall zum Konservieren der O-O-Bindung umfasst, wobei das aktive Metall aus der Gruppe bestehend aus Kupfer (Cu), Ruthenium (Ru), Rhodium (Rh), Palladium (Pd) und Platin (Pt) und beliebigen Kombinationen davon ausgewählt ist, und

wobei das weniger aktive Metall aus der Gruppe bestehend aus Gold (Au) und Quecksilber (Hg) und beliebigen Kombinationen davon ausgewählt ist,

mit der Maßgabe, dass das Material keine Legierung aus Gold und Palladium sein kann, und

wobei das Legierungskatalysatormaterial in Form von Nanopartikeln mit einer Teilchengröße von weniger als 100 nm, vorzugsweise weniger als 10 nm oder 5 nm, oder bevorzugter Teilchen im Bereich von 3 bis 5 nm vorliegt,

wobei das Legierungskatalysatormaterial eine Oberflächenstruktur aufweist, wobei das aktive Metall isolierte aktive Punkte innerhalb des weniger aktiven Materials bildet.

7. Verwendung nach Anspruch 6, wobei das Material aus Kombinationen von Platin (Pt) und Quecksilber (Hg), Palladium (Pd) und Quecksilber (Hg), Kupfer (Cu) und Quecksilber (Hg), Silber (Ag) und Quecksilber (Hg), Platin (Pt) und Gold (Au) ausgewählt ist.

8. Verwendung nach den Ansprüchen 6 bis 7, wobei das Legierungskatalysatormaterial für eine Kathodenverwendung bei der elektrochemischen Synthese von Wasserstoffperoxid aus Sauerstoff und Wasserstoff oder aus Sauerstoff und Wasser verwendet wird.

9. Verwendung nach Anspruch 8, wobei das Legierungskatalysatormaterial auf Trägermaterial abgeschieden ist.

10. Verwendung nach einem der Ansprüche 8 bis 9, wobei die Kathode für eine elektrochemische Zelle zum Synthetisieren von Wasserstoffperoxid gemäß dem Verfahren der Ansprüche 1 bis 4 verwendet wird.

11. Verwendung nach Anspruch 10, wobei die elektrochemische Zelle aus der Gruppe bestehend aus einem Protonenaustauschmembranelektrolyseur und einer Brennstoffzelle ausgewählt ist, insbesondere einer Wasserstoffbrennstoffzelle oder einer Protonenaustauschmembranbrennstoffzelle.

12. Verfahren zur Herstellung von Wasserstoffperoxid aus Sauerstoff und Wasserstoff oder aus Sauerstoff und Wasser, wobei ein Legierungskatalysatormaterial als ein Katalysator für die Sauerstoffreduktionsreaktion verwendet wird, wobei das Legierungskatalysatormaterial ein aktives Metall zum Katalysieren der Sauerstoffreduktionsreaktion und ein weniger aktives Metall zum Konservieren der O-O-Bindung umfasst,

wobei das aktive Metall aus der Gruppe bestehend aus Kupfer (Cu), Ruthenium (Ru), Rhodium (Rh), Palladium (Pd) und Platin (Pt) und beliebigen Kombinationen davon ausgewählt ist, und wobei das weniger aktive Metall aus der Gruppe bestehend aus Gold (Au) und Quecksilber (Hg) und beliebigen Kombinationen davon ausgewählt ist,

mit der Maßgabe, dass das Material keine Legierung aus Gold und Palladium sein kann, und

wobei das Legierungskatalysatormaterial in Form von Nanopartikeln mit einer Teilchengröße von weniger als 100 nm, vorzugsweise weniger als 10 nm oder 5 nm, oder bevorzugter Teilchen im Bereich von 3 bis 5 nm vorliegt,

wobei das Legierungskatalysatormaterial eine Oberflächenstruktur aufweist, worin das aktive Metall Bildung isolierter aktiver Punkte innerhalb des weniger aktiven Materials ist.

**Revendications**

1. Procédé pour la synthèse électrochimique du peroxyde d'hydrogène à partir d'un électrolyte comprenant de l'eau dans lequel un matériau catalyseur allié catalyse la réaction de réduction de l'oxygène,

dans lequel le matériau catalyseur allié comprend un métal actif permettant de catalyser la réduction de l'oxygène, et un métal moins actif permettant de conserver la liaison 0-0,

dans lequel le métal actif est choisi dans le groupe constitué du cuivre (Cu), du ruthénium (Ru), du rhodium (Rh), du palladium (Pd), et du platine (Pt), et de toutes combinaisons de ceux-ci, et

dans lequel le métal moins actif est choisi dans le groupe constitué de l'or (Au), et du mercure (Hg), et de toutes combinaisons de ceux-ci,

à condition que ledit matériau catalyseur allié ne soit pas un alliage constitué d'or et de palladium.

2. Procédé selon la revendication 1, dans lequel la teneur en eau de l'électrolyte est comprise entre 0,05 % et 100 % d'eau.

3. Procédé selon la revendication 1 ou 2, dans lequel l'électrolyte est de l'eau.

4. Procédé selon la revendication 1, dans lequel le peroxyde d'hydrogène est synthétisé à partir d'oxygène et d'hydrogène, ou d'oxygène et d'eau, ou d'oxygène et d'une source de protons choisie dans le groupe comprenant ou constitué de l'hydrogène, de l'eau, du méthanol, de l'éthanol, de l'hydrazine, de l'acide chlorhydrique, de l'acide formique, et/ou du méthane.

5. Procédé selon les revendications 1 à 4, dans lequel le potentiel de la cellule électrochimique pour la production du peroxyde d'hydrogène est inférieur à 2,0 V, tel que compris entre 0,2 et 2,0 V, ou compris entre 0,7 et 2,0 V.

6. Utilisation d'un matériau catalyseur allié pour la synthèse électrochimique selon les revendications 1 à 5, dans laquelle ledit matériau comprend un métal actif permettant de catalyser la réaction de réduction de l'oxygène, et un métal moins actif permettant de conserver la liaison 0-0, dans laquelle le métal actif est choisi dans le groupe constitué du cuivre (Cu), du ruthénium (Ru), du rhodium (Rh), du palladium (Pd), et du platine (Pt) et de toutes combinaisons de ceux-ci, et

dans laquelle le métal moins actif est choisi dans le groupe constitué de l'or (Au), et du mercure (Hg) et de toutes combinaisons de ceux-ci,

à condition que ledit matériau ne soit pas un alliage constitué d'or et de palladium, et

dans laquelle le matériau catalyseur allié est sous la forme de nanoparticules ayant une taille de particules inférieure à 100 nm, de préférence inférieure à 10 nm ou 5 nm, ou de manière davantage préférée des particules dans la plage allant de 3 à 5 nm, dans laquelle le matériau catalyseur allié a une structure de surface dans laquelle le métal actif forme des taches actives isolées à l'intérieur du matériau moins actif.

7. Utilisation selon la revendication 6, dans laquelle le matériau est choisi parmi des combinaisons de platine (Pt) et de mercure (Hg) ; de palladium (Pd) et de mercure (Hg) ; de cuivre (Cu) et de mercure (Hg) ; d'argent (Ag) et de mercure (Hg) ; de platine (Pt) et d'or (Au).

8. Utilisation selon les revendications 6 à 7, dans laquelle le matériau catalyseur allié est utilisé pour une utilisation comme cathode dans la synthèse électrochimique du peroxyde d'hydrogène à partir d'oxygène et d'hydrogène, ou à partir d'oxygène et d'eau.

9. Utilisation selon la revendication 8, dans laquelle le matériau catalyseur allié est déposé sur un matériau de support.

10. Utilisation selon l'une quelconque des revendications 8 à 9, dans laquelle la cathode est utilisée pour une cellule électrochimique destinée à synthétiser du peroxyde d'hydrogène conformément au procédé selon les revendications 1 à 4.

11. Utilisation selon la revendication 10, dans laquelle la cellule électrochimique est choisie dans le groupe constitué par un électrolyseur à membrane échangeuse de protons et une pile à combustible, en particulier une pile à combustible à hydrogène ou une pile à combustible à membrane échangeuse de protons.

12. Procédé de production de peroxyde d'hydrogène à partir d'oxygène et d'hydrogène, ou à partir d'oxygène et d'eau, dans lequel un matériau catalyseur allié est utilisé comme catalyseur pour la réaction de réduction de l'oxygène, dans lequel le matériau catalyseur allié comprend un métal actif permettant de catalyser la réaction de réduction de l'oxygène, et un métal moins actif permettant de conserver la liaison 0-0,

dans lequel le métal actif est choisi dans le groupe constitué du cuivre (Cu), du ruthénium (Ru), du rhodium (Rh), du palladium (Pd), et du platine (Pt) et de toutes combinaisons de ceux-ci, et

dans lequel le métal moins actif est choisi dans le groupe constitué de l'or (Au) et du mercure (Hg) et de toutes combinaisons de ceux-ci,

à condition que ledit matériau ne soit pas un alliage constitué d'or et de palladium, et dans lequel le matériau catalyseur allié est sous la forme de nanoparticules ayant une taille de particules inférieure à 100 nm, de préférence inférieure à 10 nm ou 5 nm, ou de manière davantage préférée des particules dans la plage allant de 3 à 5 nm,

dans lequel le matériau catalyseur allié a une structure de surface dans laquelle le métal actif forme des taches actives isolées à l'intérieur du matériau moins actif.

**Figure 1**

Figure 2

**Figure 3**

Figure 4

**Figure 5**

Figure 6

**Figure 7**

**Figure 8**

**Figure 9**

Figure 10

Figure 11

Figure 12

**Figure 13**

Figure 14

## REFERENCES CITED IN THE DESCRIPTION

### Patent documents cited in the description

- WO 2012085174 A

### Non-patent literature cited in the description

- ULLMANN'S Encyclopedia of Industrial Chemistry
- **J. M. CAMPOS-MARTIN ; G. BLANCO-BRIEVA ; J. L. G. FIERRO.** *Angew. Chem. Int. Ed.,* 2006, vol. 45, 6962-6984
- Single Atom Hot-Spots at Au-Pd Nanoalloys for Electrocatalytic H2O2 Production. *J. Am. Chem. Soc.,* 2011, vol. 133, 19432-19441
- **M. T. M. KOPER.** *J. Electroanal. Chem.,* 2011, vol. 660, 254-260
- **TAMMEVESKI, K. ; KONTTURI, K. ; NICHOLS, RJ. ; POTTER, RJ. ; SCHIFFRIN, DJ.** Surface redox catalysis for O-2 reduction on quinone-modified glassy carbon electrodes. *Journal of Electroanalytical Chemistry,* 2001, vol. 515 (1-2), 101-112
- **FELLINGER et al.** *JACS,* 2012
- **BLIZANAC et al.** *Electrochimica Acta,* 2007
- **ALVAREZ-RIZATTI et al.** *J. Electroan. Chem.,* 1983
- **JIRKOVSKY et al.** *JACS,* 2012
- **NØRSKOV, J. K. ; ROSSMEISL, J. ; LOGADOTTIR, A. ; LINDQVIST, L. ; KITCHIN, J.R. ; PEDERSEN, BLIGAARD, T. ; JONSSON, H.** Origin of the overpotential for oxygen reduction at a fuel cell cathode. *Journal of Physical Chemistry B,* 2004, vol. 104, 17886-17892
- **TANUSHREE GHOSH ; QIN ZHOU ; JOHN M. GREGOIRE ; R. BRUCE VAN DOVER ; F. J. DISALVO.** Pt-Cd and Pt-Hg Phases As High Activity Catalysts for Methanol and Formic Acid Oxidation. *JPC C,* 2008
- **SIAHROSTAMI et al.** *Enabling direct H2O2 Synthesis Via Rational Electrocatalyst Design*
- **VERDAGUER-CASADEVALL et al.** *Journal of Power Sources,* 2012, vol. 220, 205-210
- **WU et al.** *Electrochimica Acta,* 2008, vol. 10, 5961-5967
- **JIRKOVSKY, S. ; HALASA, M. ; SCHIFFRIN, D. J.** Kinetics of electrocatalytic reduction of oxygen and hydrogen peroxide on dispersed gold nanoparticles. *Physical Chemistry Chemical Physics,* 2010, vol. 12, 8042-8053